# EUROPEAN PATENT SPECIFICATION

(11) **EP 1 604 006 B1**
(45) Date of publication and mention of the grant of the patent: **05.12.2007**
(21) Application number: 03715350.9
(22) Date of filing: 14.03.2003
(51) Int. Cl.: C12G 1/032

(54) **ROTARY SPRAY APPARATUS AND WINE FERMENTATION TANK EQUIPPED WITH THE APPARATUS**
ROTIERENDE SPRÜHANLAGE UND MIT DIESER AUSGESTATTETER TANK FÜR DIE WEINGÄRUNG
APPAREIL DE PULVERISATION ROTATIF ET RESERVOIR DE FERMENTATION VINICOLE EQUIPE DE CET APPAREIL

(43) Date of publication of application: 14.12.2005
(73) Proprietor: VELO Spa, I-31030 Altivole, Treviso (IT)
(72) Inventor: VELO SPA, I-31030 Altivole (IT); VELO, Antonio, I-31010 Caerano San Marco (IT)
(74) Representative: Agostini, Agostino
(86) International application number: PCT/IT2003/000157
(87) International publication number: WO 2004/081164

(56) References cited:
- WO-A-02/46352
- DE-A- 2 012 185
- FR-A- 2 797 783
- FR-A- 2 820 755

## Description

The present invention refers to a rotary sprinkling apparatus associated to a tank in which the so-called "vinification into red", i.e. the fermentation of the must that leads to the production of red wine.

It is largely known that such a fermentation into red calls for, inside a vertical tank, a contact between the solid fraction (skins) and the liquid fraction of the pressed grapes (must), in which such a contact causes said solid fraction, i.e. said skins to release such basic active principles as the tannins and the colouring agents. Carbon dioxide is in particular developed during fermentation which pushes the solid fraction upwards, until it eventually floats on the free surface of the must with the result that, within a short time, it forms the so-called "marc hat", i.e. a relatively closely-packed, compact structure featuring a marked tendency to form again upon having been broken apart. Further to practically stopping the release of the active principles by said solid fraction, the presence of such a marc hat proves of hindrance to the disposal from the tank of the heat generated during the fermentation process, with the result that the temperature of the must can in this way rise to unacceptable levels, especially in the presence of particularly high ambient temperatures.

In order to do away with these drawbacks, the marc hat forming on the surface of the must in fermentation tanks must therefore be repeatedly broken up, since the release by the skins of the active principles that are absolutely necessary in view of obtaining a good wine product would otherwise be minimized. To a such a object it is a common practice to make use of a so-called uplifting operation (recirculation) consisting in sucking with a pump a certain quantity of must from the lower portion of the tank and using it to wet the marc hat by means of a sprinkling apparatus.

US-A-3 871 272 to Melandri discloses a sprinkling apparatus provided with multiple arms that carry as many sprinkling nozzles at the free ends thereof. The must sucked by the pump is sprinkled upon the marc hat with jets issuing from the nozzles which, due to a reaction effect, cause the apparatus to rotate. Further to being complex in its construction, this apparatus is effective in solely acting upon a limited zone of the marc hat, owing to the inclination of the jets being fixed with respect to the tank. As a result, if the tank has a large diameter at least two such apparatuses are actually needed which makes the construction more complex.

FR-A-2 797 783 to Cortiade discloses a method in which the marc hat is sprinkled and wetted by the jet coming out of an apparatus that has just a single nozzle oscillating with respect to a vertical axis which is located at the bottom end of a delivery pipe which is rotatably driven about the same vertical axis by an electric motor. Due to the combination of said rotary and oscillating movements, which are performed at the same time, the point of impingement of the jet of must against the surface of the marc hat describes a number of spirals. The pitch, which is substantially constant, and the largest possible diameter of the spirals are calculated automatically on the basis of the diameter of the fermentation tank. This sprinkling apparatus has basically two kinds of drawbacks. From a construction point of view it is in fact complex, since it requires two drive element, i.e. the electric motor for the rotary movement and a control jack for the oscillating movement, whereas from an operation point of view it has a limited effectiveness since the impingement of the jet against the surface of the marc hat tends to decrease as the distance from the delivery port of the nozzle to the surface of the marc hat increases, i.e. as the diameter of said spirals increases.

Also the sprinkling apparatus disclosed by FR-A-2820755 has a single nozzle and the point of impingement of the jet of must issued from the nozzle against the surface of the more that describes a spiral.

FR-A-2 767 532 to Gimar Tecno discloses the use of a fermentation tank that is divided into two chambers that are arranged upon each other and connected to each other via an electrically or mechanically operated valve. The upper chamber is filled with the must that is sucked by a pump from the bottom of the lower chamber and such a must, owing to said valve being actuated to open intermittently, is sprinkled upon and wets the marc hat that forms on top of the lower chamber, in the form of an umbrella-shaped jet issuing from the upper chamber. Although the extent of opening of the valve is adjustable so as to vary the flow rate, the impingement of the jet against the surface of the marc hat can in no case prove very high, i.e. much strong, since the jet itself is only due to the force of gravity. The tank is further equipped with means for oxygenating the must during the uplifting process which substantially consist of a venturi tube adapted to suck pure oxygen or air and to mix it with the must uplifted from the bottom of the tank immediately upstream of the port through which it enters into the upper chamber. However, such an oxygenation is by no means adequate owing to the bad arrangement of the venturi, which on the one hand is far too close to said port, so that the length of tube in which the mixing process takes place is too short, and on the other hand it is too far from the pump.

It would therefore be desirable, and is actually a first object object of the present invention to provide a rotary sprinkling apparatus of the above-cited type, which is adapted to operate without any interruption all over the marc hat and issues a highly effective jet of must reaching also well down into the tank.

A further object of the present invention is to provide a rotary sprinkling apparatus that is effective in ensuring an improved oxygenation of the must as the latter is being lifted up.

Another object of the present invention is to provide a rotary sprinkling apparatus which is of simple but anyway most reliable construction.

Thus, the present invention covers both a novel type of rotary sprinkling apparatus and a vertical fermentation tank for the afore-cited "vinification-into-red" process, which is equipped with said apparatus, both of them incorporating the features and characteristics as recited in the appended claims.

These features, along with the advantages deriving therefrom, will be more readily understood from the description of a preferred, although not sole embodiment of the present invention, which is given below by way of non-limiting example with reference to the accompanying drawings, in which:
- Figure 1 is a front elevation view, partially see-through, of a vertical fermentation tank for the "vinification-into-red" process equipped with a must uplifting (recirculation) line including, as a part thereof, a rotary sprinkling apparatus according to the present invention;
- Figure 2 is a top view of the same tank, in which some details shown in Figure 1 are omitted for reasons of greater simplicity;
- Figure 3 is a schematical view illustrating the path followed by the point of impingement of the jet of must onto the surface of the marc hat;
- Figure 4 is a front elevation view, partially see-through and in an enlarged-scale of the sole rotary sprinkling apparatus;
- Figure 5 is a top view of the same rotary sprinkling apparatus, in a different angular arrangement thereof.

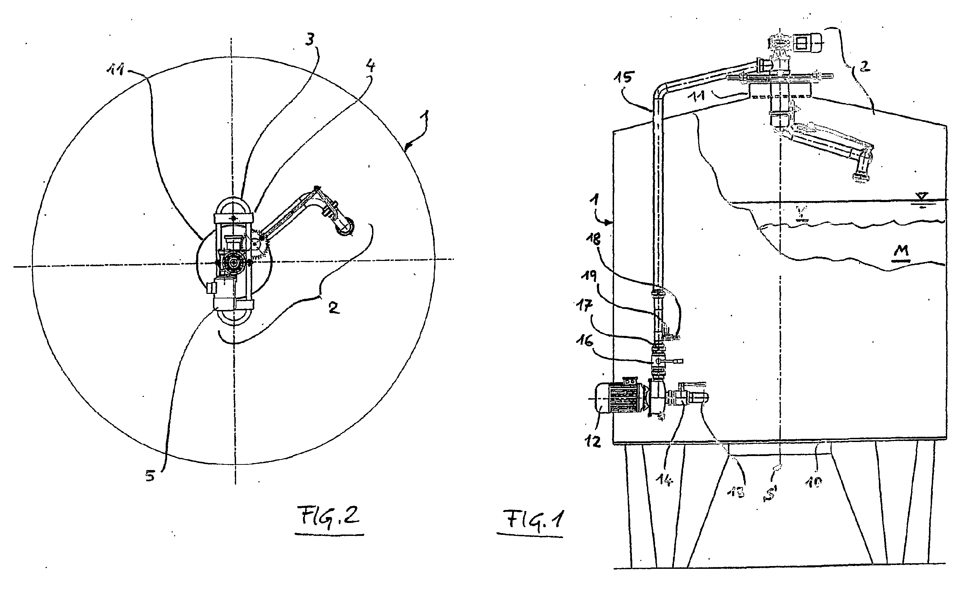

Figures 1 and 2 show a cylindrical tank 1 for the "vinification-into-red" process, the vertical axis of which is indicated at S. The tank 1 is loaded through its upper mouth 11, which is situated on top of it, with the pressed products consisting almost totally of must M (solid fraction) and skins V (solid fraction). As this has already been pointed out earlier in this description, shortly after the fermentation process has begun, the skins give rise to the formation of the marc hat V that lies floating on the must M. Slightly above the bottom 10 of the tank 1 there is located the lower intake port (not shown) of the must uplifting (recirculation) line, which is connected to the intake side of an electric pump 12 via a first elbow fitting 13 equipped with a manually operated gate valve 14. To carry out the afore described must uplifting operation, the pump 12 sucks the must from the lower zone of the tank 1 and, along an ascending pipe 15, delivers it to a sprinkling apparatus 2 provided on top of the tank 1, as this is described in greater detail below.

According to a first feature of the present invention, between the delivery side of the pump 12 and the initial section of the ascending pipe 15, the must is caused to flows, via a second manually operated gate valve 16, along a second straight fitting 17. Fitting 17 is of the converging-diverging type, in alignment with the axis of the ascending pipe 15; a short pipe 18 containing a filter (not shown) and communicating with the ambient surrounding the tank 1 via an adjustable solenoid valve 19 terminates in the narrowest section of the converging-diverging fitting. In this manner, air can be sucked from the surrounding ambient along the pipe 18 owing to a Venturi effect, when both gate valves 14 and 16 are opened and the pump 12 activates the afore cited uplifting operation. The amount of sucked air, which can be adjusted even automatically through the solenoid valve 19 (e.g. by connecting the latter to a switching and control board - not shown - of the fermentation tank 1), is able to intimately, thoroughly and effectively mix up the must M along the whole length of the ascending pipe 15, thereby ensuring the desired contribution of oxygen to the fermentation process taking place in the tank 1. It will be readily appreciated that, owing to the delivery side of the pump 12 being located very close thereto (see Figure 1), the velocity of the must M is very high inside the converging-diverging fitting 17, so that the air suction through the pipe 18 is very strong.

The rotary sprinkling apparatus 2, which is located at the end of the ascending pipe 15, and actually forms the most important feature of the present invention, is secured onto the upper mouth 11 of the tank 1 by means of a base 3 provided with adjustable fastening lug bolts 4 and 5, so as to be able to be removed if and when required (see Figure 2).

The operating part of the rotary sprinkling apparatus 2 is constituted by a removable nozzle 25 supported by an elbow 24 which is in turn supported by a first tubular member 20 in such a manner as to be able to rotate with respect thereto, as this shall be explained in greater detail further on in this description. Said first tubular member 20 is in turn mounted on to the lower end portion 31 of a second tubular member 30 which is stationary and extends along the vertical axis S of the tank 1. Said second tubular member 30 is connected on top by means of a flanged mouth 32, the axis X of which is horizontal, to the must uplifting line or, more precisely, to the final section of the ascending pipe 15.

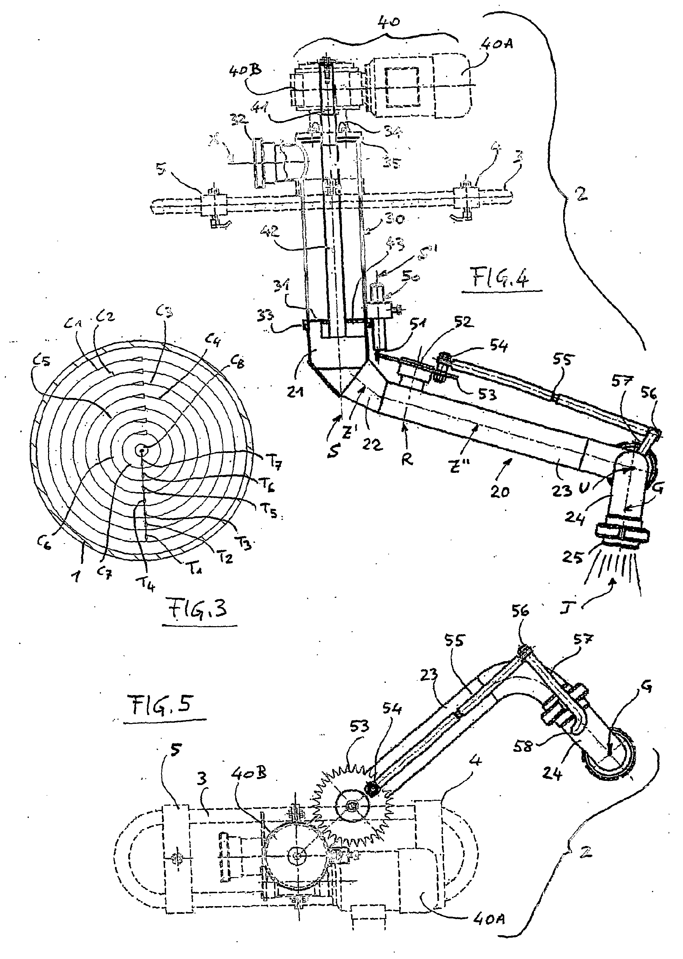

The first tubular member 20, when seen from the top downwards, consists of: a first cylindrical portion 21, which has the same axis S as the tank 1 and the second tubular member 30, to which it is connected by means of a step bearing 33; a second tapered portion 22, the axis Z' of which intersects the axis S, thereby forming an angle of approx. 45°; a third cylindrical portion 23 that supports the elbow 24. Said third portion 23 is considerably longer than the other two portions 21, 22 and has an axis Z" which in turn intersects the axis Z' of the second portion 22, thereby forming an angle of approx. 30°, namely an angle of approx. 75° with respect to the tank axis S. Said three portions 21, 22 and 23 are welded to each other so that, from a kinematical point of view, the first tubular member 20 may be viewed as forming a single piece which, thanks to the step bearing 33, is rotatatable about the axis S of the tank 1 in accordance with another feature of the present invention (in this connection, see in particular Figure 4).

To this end, the invention envisages using a single drive element 40 - which is constituted by a reversible electric motor 40A and related reduction gear 40B - the base 34 of which is rigidly fastened on to a plate 35 that closes the upper end portion of the second tubular member 30. The output shaft 41 of the reduction gear 40B is joined to an extension 42, the free end of which lies at the same level as the first portion 21 of the first tubular member 20 and is rigidly connected thereto by means of a radial appendix 43. In this manner, when the motor 40A is run, the output shaft- 41 of the reduction gear 40B rotates with the extension 42 and the latter - through the radial appendix 43 - causes the entire first tubular member 20 to rotate on the step bearing 33 about the axis S.

Immediately above the step bearing 33, on the outside of the second tubular member 30, there is attached a ratchet gear 50, the lower free end 51 of which cooperates with a crown wheel 53 along an axis S' parallel to the vertical axis S of the tank 1 and the second tubular member 30 itself. The support 52 of the crown wheel 53 is in turn attached on the outside of the third cylindrical portion 23, but close to the second tapered portion 22 of the first tubular member 20, so that the axis of rotation R of the crown wheel 53 intersects the axis S' of the ratchet gear 50 and is namely perpendicular to the axis Z" of the same third portion 23 of the first tubular member 20.

On the crown wheel 53 is pivoted the first end portion 54 of a rigid rod 55 which extends on the outside of the third portion 23 of the first tubular member 20, more or less parallel to the axis Z" of the latter. A lever 57 has its fulcrum on the second free end portion 56 of said rigid rod 55 and the free end 58 rigidly fixed on the outside of the elbow 24 (see in particular Figure 5).

The operation of the rotary sprinkling apparatus 2 of the invention during the must recirculation, which implies the sole use of the drive element 40, in addition of course to the electric pump 12, will now be described.

When the motor 40A is run, the output shaft 41 of the reduction gear 40B rotates with the extension 42 and - through the radial appendix 43 - causes the whole first tubular member 20 to rotate on the step bearing 33 about the vertical axis S of the tank 1. As a result, at each turn of the entire first tubular member 20 with respect to the second stationary tubular member 30, the crown wheel 53 turns about the axis R, too, however solely by an angle which is equal to the pitch of its teeth, owing to its being engaged with the free end 51 of the ratchet gear 50.

In other words, to the continuous rotation of the first tubular member 20 there corresponds an intermittent rotation of the crown wheel 53 which, owing to the connection established by means of the rod 55 and the lever 57, causes the nozzle 25 with the elbow 24 to also rotate intermittently about an axis U that is perpendicular to the axis Z" of the third portion 23 of the first tubular member 20 supporting it. The result is an angular advancement, namely an intermittent variation of the angle formed by the axis G of the jet of must J delivered by the nozzle 25 with respect to the vertical axis S of the tank 1 (see Figure 4).

The ultimate result, i.e. the combination of the continuous rotation of the entire first tubular member 20 and the intermittent rotation of the nozzle 25 is illustrated in Figure 3, which shows the path described by the point of impingement on the surface of the marc hat V of the jet of must J sprinkled by the apparatus 2. This trajectory can be noticed to consist of a sequence of concentric circles C₁, C₂, etc. from the axis S to the cylindrical side surface of the tank 1, and vice-versa, as well as a series of radial translations T₁, T₂, etc. from one of these circles to the next one, in which each such translation is due to the angular advancement of the crown wheel 53 about its axis R which is due to the engagement with the lower end portion 51 of the ratchet gear 50.

As compared with the afore described prior art, the rotary sprinkling apparatus of the present invention has following advantages:
- the axis G of the jet of must J issued by the nozzle 25 is not aligned with the axis S of the tank 1, but is rather offset with respect thereto, as this can be most clearly noticed in Figure 4. The jet of must J is in this way equipotential over the entire surface to be sprinkled of the marc hat V, since the trajectory through the air of the jet remains substantially constant as the diameter of the concentric circles C₁, C₂, etc. that are described by the point of impingement of the jet;
- the must uplifting and sprinkling operation proves particularly effective, since the impact of the jet J on the surface of the marc hat is such as to always and constantly cause the marc hat V itself to break up, as well as to ensure the liquid phase M constantly be stirred and remixed with the solid phase V of the pressed product and, as a result, the active principles are duly released by the skins during the fermentation process;
- at the same time, the impingement of the jet J onto the marc hat V is such as to facilitate the separation of the grape-seeds, which then settle down on the bottom of the tank 1, i.e. below the lower intake port of the must uplifting line, and are in this way separated from the must M;
- the fact that the nozzle 25 is physically separable from the elbow 24, by which it is supported, enables nozzles to be used which can be actually optimised in the shape and design thereof in accordance with the genotype and the wine that one wishes to obtain; it further enables, if required, different nozzles to be used at different phases of a single and same fermentation process;
- further to using nozzles for sprinkling the uplifted must, the possibility is given for appropriate nozzles to be fitted in view of washing and cleaning the inner surface of the tank 1 at the end of a fermentation process;
- thanks to the particular arrangement of the air suction pipe 18, the oxygen in the air is given the possibility of mixing up with the must all along the ascending pipe 15, which practically ensures a longer mixing time than possible in prior-art apparatuses;
- the rotary sprinkling apparatus of the invention makes use of a single drive element 40, which is constituted by the electric motor 40A and the reduction gear 40B, so that the construction thereof is considerably simplified and more reliable;
- in the case that tanks having differing diameters are being used, no need arises for using sprinkling apparatuses that are totally different from each other, since it will be necessary to only vary the length of the third portion 23 of the first tubular member 20, and possibly mount a more or less powerful electric driving motor 40A, to adapt the same apparatus to the differing diameters of the tanks. This of course enables the manufacturer of sprinkling apparatuses to both cut manufacturing costs and improve efficiency in the management of spare-parts.

It will be appreciated that, further to the embodiment above described by way of example, the pipe 18 may also be directly connected to an oxygen bottle and/or be fitted with a manually operated adjustment valve 19, instead of an automatic one.

## Claims

1. Rotary apparatus (2) for sprinkling with a jet (J) of must (M) the mark hat (V) in a fermentation tank (**1**) during a so-called "vinification-in-red" process, the apparatus comprising:
• a first tubular member (20) **rotatable** with respect to the tank (1) about a first axis (S),
• a nozzle (25), **rotatable** about a second axis (U) perpendicular to said first axis (S) and **sustained** by a lower portion (23) of the first tubular member (20), **the nozzle being** fed by an uplifting line that includes an ascending pipe (15) adapted to suck the must from a bottom zone of the tank (1),
**characterized in that** the said first and second axis of rotation (S, U) do not cross each other.

2. Rotary sprinkling apparatus according to claim 1, **characterized in that** it also comprises a second stationary tubular member (30) that is attached to the top portion (11) of the fermentation tank (1), the vertical axis of which is at the same time said axis of rotation (S) of said first tubular member (20) and the axis of the second stationary tubular member (30) itself.

3. Rotary sprinkling apparatus according to claim 2, **characterized in that** it also comprises a single drive element (40), attached to said second tubular member (30) and generating, via distinct linking parts (41, 42, 43; 50, 51, 53, 55, 57, 24), both the *continuous* rotation of said first tubular member (20) and the *intermittent* rotation of the nozzle (25) with respect to said first tubular member (20), so as to cause the point of impingement against the surface of the marc hat (V) of the jet (J) of must (M) issued by said nozzle (25) to describe a trajectory consisting of a sequence of concentric circles (C₁, C₂, ...) from the axis (S) to the cylindrical side surface of the tank (1), and vice-versa, as well as a series of radial translations (T₁, T₂, ...).

4. Rotary sprinkling apparatus according to claim 2, **characterized in that** said second tubular member (30) is connected on top to the final section of an ascending pipe (15) that is a part of the must uplifting line, and is connected on the bottom thereof to a first portion (21) of said first tubular member (20) by means of a step bearing (33) enabling it to rotate about the axis (S) of the second stationary tubular member (30).

5. Rotary sprinkling apparatus according to claim 3, **characterized in that** said single drive element (40), which is constituted by a motor (40A) and a reduction gear (40B), is attached to the upper end portion (35) of said second tubular member (30) and **in that** said second tubular member (30) houses therewithin the linking parts (41, 42, 43) that bring about the rotation of said first tubular member (20) with respect to the tank (1).

6. Rotary sprinkling apparatus according to claim 3, **characterized in that** the linking parts (50, 51, 53, 55, 57, 24) that bring about the rotation of the nozzle (25) with respect to said first tubular member (20) comprise in this order:
- a ratchet gear (50) fixed on the outside of said second tubular member (30) and adapted to act along an axis (S') extending parallel to the axis (S) of said second tubular member (30),
- a crown wheel (53) co-operating with the free end (51) of said ratchet gear (50) and supported by said lower portion (23) of said first tubular member (20) so as to have the axis of rotation (R) perpendicular to the axis (Z") that is inclined with respect to the axis of the same lower portion (23) of said first tubular member (20),
- a rigid rod (55) having a first end portion (54) hinged on to said crown wheel (53), whereas the second end portion thereof forms the fulcrum (56) of a lever (57), the free end of which engages an elbow (24) that constitutes the means supporting said nozzle (25) onto said first tubular member (20).

7. Rotary sprinkling apparatus according to claim 6, **characterized in that** the nozzle (25) is removable from said elbow (24) so as to enable optimised geometries of the nozzle to be implemented.

8. Rotary sprinkling apparatus according to any of the preceding claims, in which the uplifting line for the must (M) comprises pump means (12), the intake side of which is connected to a zone of the tank (1) that is close to the bottom (10) thereof, **characterized in that** between the delivery side of the same pump means (12) and the initial section of the ascending pipe (15) there is provided a converging-diverging fitting (17), in the narrowest section of which there terminates a suction pipe (18) for the suction of a gas that is at least partially constituted by oxygen, said converging-diverging fitting (17) being in alignment with the ascending pipe (15) of the must (M).

9. Rotary sprinkling apparatus according to claim 8, **characterized in that** said suction pipe (18) for the suction a gas that is at least partially constituted by oxygen is provided with an adjustment valve (19), such as for instance a solenoid valve, which is preferably adapted to be adjusted automatically by *per se* known control means.

10. Rotary sprinkling apparatus according to any of the preceding claims, **characterized in that** it is secured on the top portion (11) of the fermentation tank (1) with the aid of fastening means (3, 4, 5) that enable it to be removed when required.

11. Fermentation tank (1) for the so-called "vinification-into-red" process comprising a must uplifting line, **characterized in that** it is equipped with a rotary sprinkling apparatus (2) according to any of the preceding claims.

## Patentansprüche

1. Drehvorrichtung (2) zum Besprühen eines Tresterhuts (V) in einem Gärtank (1) mit einem Strahl (J) aus Most (M) während eines sogenannten "Vinification in Red"-Verfahrens, wobei die Vorrichtung enthält:
ein erstes rohrförmiges Element (20), das mit Bezug auf den Tank (1) um eine erste Achse (S) drehbar ist,
eine Düse (25), die um eine zweite Achse (U) drehbar ist, die senkrecht zu der ersten Achse (S) ist, und die von einem unteren Abschnitt (23) des ersten rohrförmigen Elements (20) gehalten wird, wobei die Düse durch eine Hebeleitung gespeist wird, die ein Steigrohr (15) enthält, das daran angepasst ist, den Most aus einem Bodenbereich des Tanks (1) abzusaugen,
**dadurch gekennzeichnet, dass**
die erste und zweite Drehachse (S, U) einander nicht kreuzen.

2. Drehsprühvorrichtung nach Anspruch 1, **dadurch gekennzeichnet, dass** sie auch ein zweites stationäres rohrförmiges Element (30) enthält, das mit dem oberen Abschnitt (11) des Gärtanks (1) verbunden ist, wobei dessen Vertikalachse gleichzeitig die Drehachse (S) des ersten rohrförmigen Elements (20) und die Achse des zweiten rohrförmigen Elements (30) selbst ist.

3. Drehsprühvorrichtung nach Anspruch 2, **dadurch gekennzeichnet, dass** sie auch ein Einzelantriebselement (40) enthält, das mit dem zweiten rohrförmigen Element (30) verbunden ist und über verschiedene Verbindungsteile (41, 42, 43; 50, 51, 53, 55, 57, 24) sowohl die kontinuierliche Drehung des ersten rohrförmigen Elements (20) als auch die intermittierende Drehung der Düse (25) relativ zu dem ersten rohrförmigen Element (20) erzeugt, so dass bewirkt wird, dass der Auftreffpunkt des von der Düse (25) abgegebenen Strahls (J) aus Most (M) auf der Oberfläche des Tresterhuts (V) eine Bahnkurve beschreibt, die aus einer Reihe von konzentrischen Kreisen (C1, C2, ...) von der Achse (S) aus zu der zylindrischen Seitenfläche des Tanks (1) hin und umgekehrt sowie aus einer Reihe seitlicher Verschiebungen (T1, T2 ...) besteht.

4. Drehsprühvorrichtung nach Anspruch 2, **dadurch gekennzeichnet, dass** das das zweite rohrförmige Element (30) oben mit dem Endabschnitt eines Steigrohrs (15) verbunden ist, das ein Teil der Mosthebeleitung ist, und unten mittels eines Stützlagers (33) mit einem ersten Abschnitt (21) des ersten rohrförmigen Elements (20) verbunden ist, was es ihm ermöglicht, sich um die Achse (S) des zweiten rohrförmige Elements (30) zu drehen.

5. Drehsprühvorrichtung nach Anspruch 3, **dadurch gekennzeichnet, dass** das Einzelantriebselement (40), das durch einen Motor (40A) und ein Untersetzungsgetriebe (40B) gebildet ist, an dem oberen Endabschnitt (35) des zweiten rohrförmigen Elements (30) angebracht ist und dass das zweite rohrförmige Element (30) in sich die Verbindungsteile (41, 42, 43) aufnimmt, die die Drehung des ersten rohrförmigen Elements (20) relativ zu dem Tank (1) bewirken.

6. Drehsprühvorrichtung nach Anspruch 3, **dadurch gekennzeichnet, dass** die Verbindungsteile (50, 51, 53, 55, 57, 24), die die Drehung der Düse (25) relativ zu dem ersten rohrförmigen Element (20) bewirken, in dieser Reihenfolge enthalten:
eine Sperrklinkenvorrichtung (50), die an dem Äußeren des zweiten rohrförmigen Elements (30) befestigt ist und daran angepasst ist, entlang einer Achse (S') zu wirken, die parallel zu der Achse (S) des zweiten rohrförmigen Elements (30) ist,
ein Kronrad (53), das mit dem freien Ende (51) der Sperrklinkenvorrichtung (50) zusammenwirkt und von dem unteren Abschnitt (23) des ersten rohrförmigen Elements (20) so gehalten wird, dass die Drehachse (R) senkrecht zu der Achse Z" ist, die mit Bezug auf die Achse desselben unteren Abschnitts (23) des ersten rohrförmigen Elements (20) geneigt ist,
ein starres Rohr (55), das einen ersten Endabschnitt (54) aufweist, der in das Kronrad (53) eingehängt ist, während sein zweiter Endabschnitt den Drehpunkt (56) eines Hebels (57) bildet, dessen freies Ende in ein Bogenstück (24) eingreift, das das Mittel bildet, das die Düse (25) an dem ersten rohrförmigen Element (20) hält.

7. Drehsprühvorrichtung nach Anspruch 6, **dadurch gekennzeichnet, dass** die Düse (25) von dem Bogenstück (24) entfernbar ist, um es zu ermöglichen, optimierte Düsengeometrien zu einzusetzen.

8. Drehsprühvorrichtung nach einem der vorigen Ansprüche, bei dem die Hebeleitung für den Most (M) ein Pumpmittel (12) enthält, dessen Aufnahmeseite mit einer Zone des Tanks (1) verbunden ist, die nahe dessen Boden (10) liegt,
**dadurch gekennzeichnet, dass**
zwischen der Ausgabeseite selbigen Pumpmittels (12) und dem Anfangsabschnitt des Steigrohrs (15) ein konvergierenddivergierendes Anschlussstück (17) bereitgestellt ist, in dessen engstem Abschnitt ein Saugrohr (18) endet zum Saugen eines Gases, das zumindest teilweise aus Sauerstoff gebildet ist,
wobei das konvergierend-divergierende Anschlussstück (17) mit dem Steigrohr (15) des Mosts (M) ausgerichtet ist.

9. Drehsprühvorrichtung nach Anspruch 8, **dadurch gekennzeichnet, dass** das Saugrohr (18) zum Saugen eines Gases, das zumindest teilweise aus Sauerstoff gebildet ist, mit einem Stellventil (19) wie z.B. einem Solenoidventil versehen ist, das vorzugsweise daran angepasst ist, durch an sich bekannte Steuermittel eingestellt zu werden.

10. Drehsprühvorrichtung nach einem der vorigen Ansprüche, **dadurch gekennzeichnet, dass** es auf dem oberen Abschnitt (11) des Gärtanks (1) mithilfe von Befestigungsmitteln (3, 4, 5) befestigt ist, die es ermöglichen, das sie erforderlichenfalls entfernt wird.

11. Gärtank (1) für das sogenannte "Vinification in Red"-Verfahren, der eine Mosthebeleitung aufweist, **dadurch gekennzeichnet, dass** er mit einer Drehsprühvorrichtung (2) nach einem der vorigen Ansprüche versehen ist.

## Revendications

1. Appareil rotatif (2) destiné à asperger avec un jet (J) de moût (M) le chapeau de marc (V) dans une cuve de fermentation (1) au cours de ce que l'on appelle un procédé de "vinification en rouge", l'appareil comprenant :
un premier élément tubulaire (20) pouvant être mis en rotation par rapport à la cuve (1) autour d'un premier axe (S),
une buse (25), pouvant être mise en rotation autour d'un second axe (U) perpendiculaire audit premier axe (S) et soutenu par une portion inférieure (23) du premier élément tubulaire (20), la buse étant alimentée par une ligne de soulèvement qui comporte une colonne montante (15) adaptée pour aspirer le moût depuis une zone de fond de la cuve (1),
**caractérisé en ce que** lesdits premier et second axes de rotation (S, U) ne se croisent pas l'un l'autre.

2. Appareil rotatif d'aspersion selon la revendication 1, **caractérisé en ce qu'**il comprend également un second élément tubulaire fixe (30) qui est attaché à la portion haute (11) de la cuve de fermentation (1) dont l'axe vertical est en même temps ledit axe de rotation (S) dudit premier élément tubulaire (20) et l'axe du second élément tubulaire fixe (30) lui-même.

3. Appareil rotatif d'aspersion selon la revendication 2, **caractérisé en ce qu'**il comprend également un élément d'entraînement unique (40), attaché audit second élément tubulaire (30) et générant, via des parties de liaison distinctes (41, 42, 43 ; 50, 51, 53, 55, 57, 24), à la fois la rotation continue dudit premier élément tubulaire (20) les rotations intermittentes de la buse (25) par rapport audit premier élément tubulaire (20), de façon à amener le point d'impact contre la surface du chapeau de marc (V) du jet (J) de moût (M) sorti par la buse (25) à décrire une trajectoire consistant en une séquence de cercles concentriques (C₁, C₂, ...) depuis l'axe (S) jusqu'à la surface latérale cylindrique de la cuve (1), et vice et versa, ainsi qu'une série de déplacements radiaux (T₁, T₂, ...).

4. Appareil rotatif d'aspersion selon la revendication 2, **caractérisé en ce que** ledit second élément tubulaire (30) est relié par le haut à la section finale d'une colonne montante (15) qui est une partie de la ligne de soulèvement de moût, et est reliée par le bas de celui-ci à une première portion (21) dudit premier élément tubulaire (20) au moyen d'une crapaudine (33) lui permettant d'effectuer une rotation autour de l'axe (S) du second élément tubulaire fixe (30).

5. Appareil rotatif d'aspersion selon la revendication 3, **caractérisé en ce que** ledit élément d'entraînement unique (40), qui est constitué d'un moteur (40A) et d'un engrenage réducteur (40B), est attaché à la portion d'extrémité supérieure (35) dudit second élément tubulaire (30) et **en ce que** ledit second élément tubulaire (30) y loge les parties de liaison (41, 42, 43) qui provoquent la rotation dudit premier élément tubulaire (20) par rapport à la cuve (1).

6. Appareil rotatif d'aspersion selon la revendication 3, **caractérisé en ce que** les parties de liaison (50, 51, 53, 55, 57, 24) qui provoquent la rotation de la buse (25) par rapport audit premier élément tubulaire (20) comprennent dans cet ordre :
- un engrenage à rochet (50) fixé sur l'extérieur dudit second élément tubulaire (30) et adapté pour agir le long d'un axe (S') s'étendant parallèlement à l'axe (S) dudit second élément tubulaire (30),
- une roue de couronne (53) fonctionnant conjointement avec l'extrémité libre (51) dudit engrenage à rochet (50) et supportée par ladite portion inférieure (23) dudit premier élément tubulaire (20) de façon à avoir l'axe de rotation (R) perpendiculaire à l'axe (Z") qui est incliné par rapport à l'axe de la même portion inférieure (23) dudit premier élément tubulaire (20),
- une barre rigide (55) ayant une première portion d'extrémité (54) articulée sur ladite roue de couronne (53), alors que sa seconde portion d'extrémité forme le point d'appui (56) d'un levier (57) dont l'extrémité libre se met en prise avec un coude (24) qui constitue le moyen qui supporte ladite buse (25) sur ledit premier élément tubulaire (20).

7. Appareil rotatif d'aspersion selon la revendication 6, **caractérisé en ce que** la buse (25) peut être retirée dudit coude (24) de façon à permettre de mettre en oeuvre les géométries optimisées de la buse.

8. Appareil rotatif d'aspersion selon l'une quelconque des revendications précédentes, dans lequel la ligne de soulèvement pour le moût (M) comprend un moyen formant pompe (12) dont le côté admission est relié à une zone de la cuve (1) qui est proche du fond (10) de celle-ci, **caractérisé en ce qu'**entre le côté refoulement du même moyen formant pompe (12) et la section initiale de la colonne montante (15), un raccord convergeant-divergeant (17) est disposé, la section la plus étroite se terminant par une colonne d'aspiration (18) pour l'aspiration d'un gaz qui est au moins partiellement constitué d'oxygène, ledit raccord convergeant-divergeant (17) étant aligné avec la colonne montante (15) du moût (M).

9. Appareil rotatif d'aspersion selon la revendication 8, **caractérisé en ce que** ladite colonne d'aspiration (18) pour l'aspiration d'un gaz qui au moins partiellement constitué d'oxygène est prévue avec une soupape d'ajustement (19), tel que par exemple une soupape à solénoïde, qui est de préférence adaptée pour être automatiquement ajustée par un moyen de commande connu en soi.

10. Appareil rotatif d'aspersion selon l'une quelconque des revendications précédentes, **caractérisé en ce qu'**il est fermement fixé sur la portion haute (11) de la cuve de fermentation (1) à l'aide d'un moyen de fixation (3, 4, 5) qui lui permet d'être retiré lorsque cela est nécessaire.

11. Cuve de fermentation (1) pour ce que l'on appelle le procédé de "vinification en rouge" comprenant une ligne de soulèvement de moût, **caractérisé en ce qu'**elle est équipée d'un appareil rotatif d'expression (2) selon l'une quelconque des revendications précédentes.
